# EUROPEAN PATENT APPLICATION

(11) **EP 3 686 023 A1**
(43) Date of publication of application: **29.07.2020**
(21) Application number: 18859507.8
(22) Date of filing: 31.08.2018
(51) Int. Cl.: B42D 15/00, B44C 1/14

(54) **PRINTED OBJECT WITH DECORATION**

(30) Priority: 21.09.2017 JP 2017197239
(71) Applicant: Angel Playing Cards Co., Ltd., Higashiomi-shi, Shiga 527-0232 (JP)
(72) Inventor: SHIGETA Yasushi, Higashiomi-shi Shiga 527-0232 (JP)
(74) Representative: Lang, Johannes
(86) International application number: PCT/JP2018/032299
(87) International publication number: WO 2019/058925

(57) **Abstract**

To solve the problem of requiring a number of fabrication steps for making a printed matter formed with protrusions and depressions and having its protruding portions decorated with metal foil. A printed matter according to the present invention includes: a sheet or base paper; a printed layer printed on a surface of the sheet or base paper with ink containing releasing agent; a graphic formed on a surface of the printed layer with ink or resin that adheres to the printed layer; and a metal foil applied only on a surface of the graphic via adhesive having a property of not adhering to the printed layer but adhering to the graphic formed of ink or resin.

## Description

### BACKGROUND OF THE INVENTION

### Field of the Invention

The present invention relates to a printing method for a printed matter with decorations and a printed matter.

### Description of the Related Art

One method for decorating a printed matter is forming a design surface which is three-dimensional enough for giving visual and tactile sense of protrusions and depressions on the surface of the printed matter and applying metal foil to the protruding portions of the design. A known method of this kind is a decoration method described in Japanese Patent No. 6140859. The decoration method forms a varnish layer on a printed base paper, performs raised printing of a graphic by silk screen printing using ink having good adhesiveness to the varnish layer, and then attaches metal foil only at the graphic portion.

### SUMMARY OF THE INVENTION

The value of a printed matter formed with protrusions and depression is enhanced by decoration of the protruding portions with metal foil. However, fabrication of such a printed matter requires a number of process steps, i.e., printing on a base paper serving as substrate and the subsequent printing of a varnish layer having releasing effect, printing of raised portions, and pressing of a metal foil layer.

The present invention has been made in view of such circumstances and an object thereof is to provide a decorated printed matter that can be fabricated in a small number of steps.

To attain the object, a printed matter according to the present invention includes:
a sheet or base paper;
a printed layer printed on a surface of the sheet or base paper with ink containing releasing agent;
a graphic formed on a surface of the printed layer with ink or resin that adheres to the printed layer; and
a metal foil applied only on a surface of the graphic via adhesive having a property of not adhering to the printed layer but adhering to the graphic formed of ink or resin.

A medium containing releasing agent may be further applied on the surface of the sheet or base paper entirely.

Furthermore, a hologram film may be affixed on the sheet or base paper.

The printed matter of the present invention enables provision of a printed matter having a metal foil three-dimensionally formed thereon and fabricated in a small number of steps.

### BRIEF DESCRIPTION OF THE DRAWINGS

FIG. 1 is an illustration of a printed matter formed by a decoration method according to the present invention;
FIG. 2 is an illustration of a print artwork for printing to be provided on a surface of a card and a print artwork for forming decoration.
FIG. 3A is illustrations for describing the structure of a printed matter with decorations according to the present invention.
FIG. 3B is illustrations for describing the structure of a printed matter with decorations according to the present invention.

### DETAILED DESCRIPTION OF THE PREFERRED EMBODIMENTS

Embodiments of the present invention will be now described with reference to the accompanying drawings.

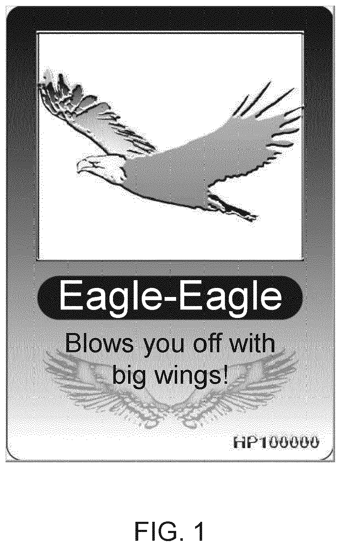

FIG. 1 is an illustration representing a printed surface of a card 1 formed according to the present invention.

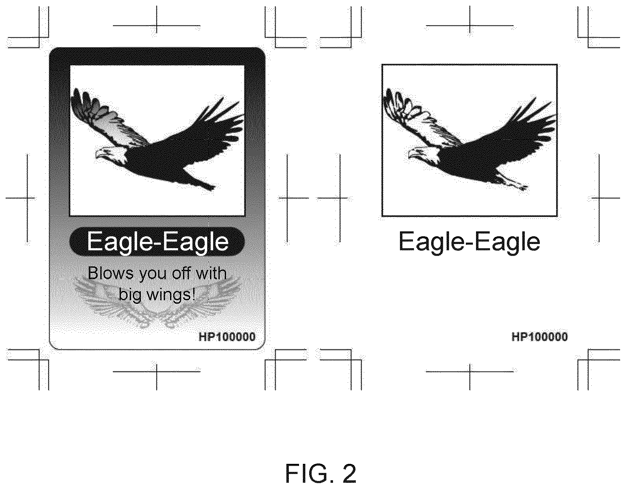

FIG. 2 shows a print artwork A for forming a design (a printed layer containing releasing agent 3) to be provided on a surface of the card 1, and a print artwork B for forming decorations (a protruding layer 5 representing a graphic and a metal foil 6) to be laminated on the printed layer containing releasing agent 3 formed via the print artwork A. The present invention can produce a printed matter having a characteristic decoration effect by means of such print artworks A, B and the process described below.

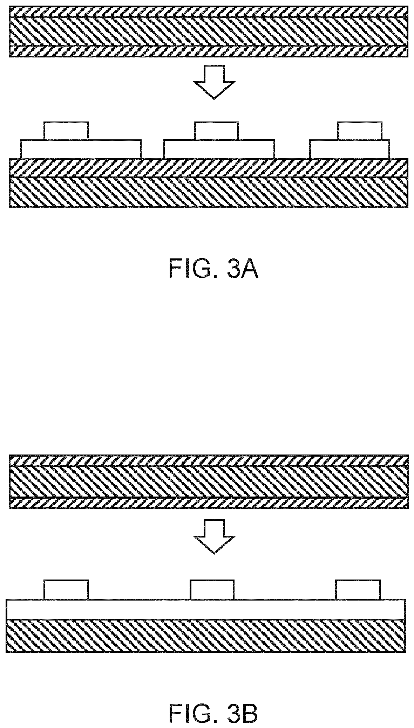

Referring now to FIG. 3A, a decoration method for a printed matter using the print artworks A, B and the structure of the printed matter are described.

First, using an offset printing machine, a coating of a medium containing releasing agent (release varnish) is formed on an entire surface of a base paper 2 (which is in the form of a sheet in the printing stage and punched into the shape of a card in a later step).

The coating formed of release varnish serves to provide releasing effect for adhesive which is used for bonding of the metal foil 6 as discussed later. This coating will be described as a release layer 4 hereinbelow.

Optionally, decorations such as affixing a hologram film for displaying a pattern or design by causing diffuse reflection of light may be applied to the base paper 2 prior to forming the coating of release varnish.

After forming the release layer 4 as described above, the design shown on the print artwork A is printed using a printing machine. The printing machine is a common four-color offset printing machine. The print artwork A is data that can be processed by the offset printing machine, and printing is performed by four-color printing such as with CMYK or multi-color printing with more than four colors. Further, by mixing releasing agent into printing ink, the printed layer is given releasing effect for the adhesive used for bonding of the metal foil 6 as discussed later. This printed layer will be described as the printed layer containing releasing agent 3 hereinbelow.

As shown in FIG. 3B, in a case where the design shown on the print artwork A is printed on the entire surface, the printed layer containing releasing agent 3 may be formed directly on the base paper without providing the release layer 4 mentioned above.

After forming the printed layer containing releasing agent 3, the print artwork B is used to print a graphic which will form the protruding layer 5 by silk screen printing with ink having good adhesiveness to the printed layer containing releasing agent 3. The protruding layer 5 may be colored or colorless depending on the design for printing and the like. Also, the protruding layer 5 may be formed by printing or application of resin having a similar effect.

Following the foregoing step, the metal foil 6 is pressed onto the surface of the base paper 2, on which the release layer 4, the printed layer containing releasing agent 3, and the protruding layer 5 have been formed.

On the surface of the metal foil 6, a thin adhesive layer 6b has been applied, forming an adhesive surface. This adhesive has a property of not adhering to the release layer 4 and the printed layer containing releasing agent 3 mentioned above and adhering to the protruding layer 5 provided on the printed layer containing releasing agent 3.

Upon pressing a film 6a having the metal foil 6 thereon against the surface of the base paper 2, on which the release layer 4, the printed layer containing releasing agent 3, and the protruding layer 5 have been formed, using a roller or the like and then peeling off the film 6a, the metal foil 6 adheres only to the surface of the protruding layer 5. In this process, since the metal foil 6 does not adhere to the release layer 4 and the printed layer containing releasing agent 3 as mentioned above, the printed layer containing releasing agent 3 remains visible. In this manner, by making the metal foil 6 adhere according to the pattern formed as the protruding layer 5, a gloss pattern is formed as a decorative portion for decorating the printed layer containing releasing agent 3.

As mentioned above, the protruding layer 5 is formed by silk screen printing, allowing formation of an intricate pattern with the metal foil 6.

The surface of the protruding layer 5 in particular is subjected to high pressing stress of the metal foil 6 compared to lower portions other than the protruding layer 5. Thus, a pattern with a contour clearly represented by the metal foil 6 attached to the surface of the protruding layer 5 is formed.

### REFERENCE SIGNS LIST

- 1: card
- 2: base paper
- 3: printed layer containing releasing agent
- 4: release layer
- 5: protruding layer
- 6: metal foil

## Claims

1. A printed matter comprising:
a sheet or base paper;
a printed layer printed on a surface of the sheet or base paper with ink containing releasing agent;
a graphic formed on a surface of the printed layer with ink or resin that adheres to the printed layer; and
a metal foil applied only on a surface of the graphic via adhesive having a property of not adhering to the printed layer but adhering to the graphic formed of ink or resin.

2. The printed matter according to claim 1, wherein a medium containing releasing agent is further applied on the surface of the sheet or base paper entirely.

3. The printed matter according to claim 1, wherein a hologram film is affixed on the sheet or base paper.
